# EUROPÄISCHE PATENTANMELDUNG

(11) **EP 4 516 427 A1**
(43) Veröffentlichungstag der Anmeldung: **05.03.2025**
(21) Anmeldenummer: 23193821.8
(22) Anmeldetag: 29.08.2023
(51) Int. Cl.: B22F 7/06, B22F 7/08, B22F 10/28, B22F 10/66, B23B 27/10, B23B 27/16, B23C 5/00, B23P 15/28, B33Y 10/00, B33Y 40/20, B33Y 80/00, B22F 5/00

(54) **VERFAHREN ZUR HERSTELLUNG VON EINEM GRUNDKÖRPERVERBUND**

(71) Anmelder: CERATIZIT Austria Gesellschaft m.b.H., 6600 Reutte (AT)
(72) Erfinder: PRAST, Josef, 6600 Reutte (AT)
(74) Vertreter: Ciesla, Dirk

(57) **Zusammenfassung**

Verfahren zur Herstellung von einem Grundkörperverbund (1, 11, 16) für ein Zerspanungswerkzeug, umfassend die Verfahrensschritte: a) Bereitstellen von einem hinteren Grundkörper (3, 12, 17), b) additives Aufbauen von einem vorderen Grundkörper (4, 13, 18) auf dem hinteren Grundkörper (3, 12, 17), c) Abtragen von Material von dem vorderen Grundkörper (4, 13, 18) und dem hinteren Grundkörper (3, 12, 17) jeweils angrenzend an eine zwischen dem vorderen Grundkörper (4, 13, 18) und dem hinteren Grundkörper (3, 12, 17) in Schritt b) gebildete Schnittstelle (8, 10, 15).

## Beschreibung

Die vorliegende Erfindung betrifft ein Verfahren zur Herstellung von einem Grundkörperverbund für ein Zerspanungswerkzeug, umfassend die Verfahrensschritte: a) Bereitstellen von einem hinteren Grundkörper, b) additives Aufbauen von einem vorderen Grundkörper auf dem hinteren Grundkörper.

Die vorliegende Erfindung betrifft ferner einen Grundkörperverbund für ein Zerspanungswerkzeug, umfassend einen hinteren Grundkörper und einen additiv auf den hinteren Grundkörper aufgebauten vorderen Grundkörper.

EP 381 584 0 A1 zeigt ein Zerspanungswerkzeug, bei dem der Hauptkörper in Form eines Zerspanungswerkzeugkopfs auf ein Zwischenelement additiv aufgebaut ist. Das aus der EP 381 584 0 A1 bekannte Zerspanungswerkzeug hat eine reduzierte Dauerfestigkeit und Biegebruchfestigkeit.

Die Aufgabe der vorliegenden Erfindung besteht darin, ein Verfahren zur Herstellung von einem Grundkörperverbund mit einer verbesserten Dauerfestigkeit und Biegebruchfestigkeit sowie einen solchen Grundkörperverbund bereitzustellen.

Die technische Aufgabe der vorliegenden Erfindung wird gelöst durch den Gegenstand von Anspruch 1. Vorteilhafte Weiterbildungen der Erfindung sind den abhängigen Ansprüchen zu entnehmen, die untereinander frei kombinierbar sind.

Verfahren zur Herstellung von einem Grundkörperverbund für ein Zerspanungswerkzeug, umfassend die Verfahrensschritte: a) Bereitstellen von einem hinteren Grundkörper, b) additives Aufbauen von einem vorderen Grundkörper auf dem hinteren Grundkörper, c) Abtragen von Material von dem vorderen Grundkörper und dem hinteren Grundkörper jeweils angrenzend an eine zwischen dem vorderen Grundkörper und dem hinteren Grundkörper in Schritt b) gebildete Schnittstelle.

Indem in Schritt c) angrenzend an die Schnittstelle jeweils Material von dem vorderen Grundkörper und dem hinteren Grundkörper abgetragen wird, wird sowohl von dem vorderen Grundkörper als auch von dem hinteren Grundkörper jeweils Material entfernt. Es hat sich gezeigt, dass dadurch überraschenderweise die Dauerschwingfestigkeit und Biegebruchfestigkeit des Grundkörperverbunds erhöht werden, insbesondere, wenn der vordere Grundkörper durch Schmelzen und Erstarren eines Aufbaumaterials, vorzugsweise eines Stahlpulvers, additiv auf dem hinteren Grundkörper aufgebaut wird, indem durch das Abtragen von Material in Schritt c) dann eine Einbrandzone im Bereich der Schnittstelle im Wesentlichen entfernt wird, vorzugsweise gänzlich, so dass dann die Schnittstelle im Wesentlichen einbrandzonenfrei beziehungsweise gänzlich einbrandzonenfrei ist; während im radial Inneren der Schnittstelle volumenbedingt homogenere Abkühlbedingungen vorliegen, sind diese am Außenumfang inhomogener, so dass durch das an das Schmelzen erfolgende Erstarren des vorderen Grundkörpers üblicherweise eine sogenannte Einbrandzone am Außenumfang der Schnittstelle entsteht, welche durch das Abtragen von Material entfernbar ist.

Der hintere Grundkörper kann konventionell, also nicht additiv hergestellt sein, zum Beispiel durch Fräsen, Bohren und/oder Schleifen.

Gemäß einer vorteilhaften Weiterbildung des Verfahrens wird in Schritt c) das Abtragen von Material mechanisch durchgeführt wird. Dadurch wird zum Beispiel jeweils Material von dem vorderen Grundkörper und dem hinteren Grundkörper durch Fräsen und/oder Schleifen entfernt, wodurch Zeit und Kosten gespart werden.

Gemäß einer vorteilhaften Weiterbildung des Verfahrens wird in Schritt c) eine sich beidseitig von der Schnittstelle erstreckende Rille erzeugt. Die Rille sorgt für einen besonders sanften außenumfangsseitigen Übergang von dem hinteren Grundkörper in den vorderen Grundkörper und umgekehrt.

Gemäß einer vorteilhaften Weiterbildung des Verfahrens wird der vordere Grundkörper in Schritt b) durch selektives Schmelzen eines Stahlpulvers additiv aufgebaut. Beim selektiven Schmelzen, vorzugsweise Laserschmelzen oder Elektronenstrahlschmelzen, entsteht üblicherweise im Bereich der Schnittstelle eine Einbrandzone, welche durch das Abtragen von Material des Schritts c) im Wesentlichen, vorzugsweise gänzlich, entfernt wird. Gerade diese Einbrandzone stellt üblicherweise eine Schwachstelle bereit, so dass das Abtragen des Material des Schritts c) die Lebensdauer des durch die Schritte a) bis c) hergestellten Grundkörperverbunds erhöht, indem die Einbrandzone im Wesentlichen, vorzugsweise gänzlich, entfernt wird.

Gemäß einer vorteilhaften Weiterbildung des Verfahrens ist das Stahlpulver ein Maraging-Stahlpulver. Wenn das Stahlpulver ein Maraging-Stahlpulver ist, wird vorzugsweise zeitlich zwischen Schritt b) und Schritt c) oder zeitlich nach Schritt c) eine Ausscheidungshärtung des dann aus dem Maraging-Stahlpulver additiv aufgebauten vorderen Grundkörpers durchgeführt.

Aus Maraging-Stahlpulver hergestellte Bauteile zeichnen sich durch hohe Festigkeit und Härte aus und Maraging-Stahlpulver sind zugleich für die additive Herstellung des vorderen Grundkörpers gut geeignet. So sind Maraging Stähle ("Maraging", von englisch "martensite" (Martensit) und "aging" (Alterung), also martensitaushärtbarer Stahl) eine spezielle Gruppe von martensitischen Stählen mit hohem Nickelgehalt (d. h. üblicherweise mehr als 10 Masseprozent Nickel) und niedrigem Kohlenstoffgehalt (d. h. üblicherweise bis zu maximal 0,03 Masseprozent Kohlenstoff), die in einem vergleichsweise duktilen martensitischen Zustand hergestellt und später durch Alterungsbehandlung gestärkt werden können.

Gemäß einer vorteilhaften Weiterbildung umfasst der Maraging-Stahl des Maraging-Stahlpulvers 17 bis 20 Masseprozent Nickel, 8 bis 12,5 Masseprozent Cobalt, 3 bis 5,2 Masseprozent Molybdän, 0,15 bis 1,8 Masseprozent Titan, 0,05 bis 0,15 Masseprozent Aluminium, 0 bis 0,5 Masseprozent Chrom, 0 bis 0,5 Masseprozent Kupfer, 0 bis 0,15 Masseprozent Mangan, 0 bis 0,1 Masseprozent Silizium, 0 bis 0,03 Masseprozent Kohlenstoff, Rest Eisen und unvermeidbare Verunreinigungen. Wenn der Maraging-Stahl des Maraging-Stahlpulvers diese Zusammensetzung aufweist oder aus ihr besteht, ist er für eine additive Herstellung des vorderen Grundkörpers auf dem hinteren Grundkörper besonders gut geeignet.

Vorzugsweise besteht der Maraging-Stahl des Maraging-Stahlpulvers aus 17 bis 20 Masseprozent Nickel, 8 bis 12,5 Masseprozent Cobalt, 3 bis 5,2 Masseprozent Molybdän, 0,15 bis 1,8 Masseprozent Titan, 0,05 bis 0,15 Masseprozent Aluminium, 0 bis 0,5 Masseprozent Chrom, 0 bis 0,5 Masseprozent Kupfer, 0 bis 0,15 Masseprozent Mangan, 0 bis 0,1 Masseprozent Silizium, 0 bis 0,03 Masseprozent Kohlenstoff, Rest Eisen und unvermeidbare Verunreinigungen. Besonders bevorzugt ist die in diesen Zusammensetzungsbereich fallende genormte Zusammensetzung 1.2709 (Werkstoffnummer gemäß DIN EN 10027-2:2015-07, Juli 2015, also in Masseprozent auf die gesamte Zusammensetzung bezogen, 17 bis 19 Nickel, 8,5 bis 10 Cobalt, 4,5 bis 5,2 Mo, 0,8 bis 1,2 Titan, maximal 0,03 Kohlenstoff, maximal 0,1 Silizium, maximal 0,15 Mangan, maximal 0,25 Chrom, Rest Eisen und unvermeidbare Verunreinigungen).

Gemäß einer vorteilhaften Weiterbildung des Verfahrens ist der hintere Grundkörper konventionell hergestellt. Der hintere Grundkörper ist beim Bereitstellen in Schritt a) vorzugsweise konventionell hergestellt, also zum Beispiel durch Schleifen, Fräsen, Drehen oder Bohren, also subtraktiv. Dies spart Kosten und steigert die Produktivität des Verfahrens. Vorzugsweise wird der hintere Grundkörper in Schritt b) auf eine Temperatur größer 25°C aufgeheizt, vorzugsweise auf 100°C oder mehr, um thermische Spannung beim additiven Aufbauen abzubauen.

Gemäß einer vorteilhaften Weiterbildung des Verfahrens wird in Schritt b) der vordere Grundkörper unter Ausbildung von einem zumindest abschnittsweise räumlich gekrümmten Kühlmittelkanal additiv aufgebaut, vorzugsweise so, dass der gekrümmte Kühlmittelkanal an einen konventionell, also durch zum Beispiels Fräsen und/oder Bohren, hergestellten Kühlmittelkanal des hinteren Grundkörpers fluidkommunizierend angeschlossen wird.

Gemäß einer vorteilhaften Weiterbildung des Verfahrens wird in Schritt b) der vordere Grundkörper unter Ausbildung von zumindest einem Plattensitz zur Montage von einem Schneidelement additiv aufgebaut.

Die Aufgabe wird auch durch den Grundkörperverbund nach Anspruch 9 gelöst.

Grundkörperverbund für ein Zerspanungswerkzeug, umfassend einen hinteren Grundkörper und einen additiv auf den hinteren Grundkörper aufgebauten vorderen Grundkörper, wobei der Grundkörperverbund an einer Schnittstelle zwischen dem hinteren Grundkörper und dem vorderen Grundkörper eine umlaufende Rille aufweist, wobei die Rille beidseitig von der Schnittstelle erstreckend ausgebildet ist.

Durch die Rille erscheint in einem Längsschnitt des Grundkörperverbunds die an die Schnittstelle angrenzende Mikrostruktur aufseiten des vorderen Grundkörpers im radial Inneren mit der radial äußeren in einer lichtmikroskopischen Aufnahme bei 50-facher Vergrößerung identisch, und analog erscheint in diesem Längsschnitt die an die Schnittstelle angrenzende Mikrostruktur aufseiten des hinteren Grundkörpers im radial Inneren mit der radial äußeren in einer lichtmikroskopischen Aufnahme bei 50-facher Vergrößerung identisch.

Die Rille ist eine Vertiefung, die sich beidseitig von der Schnittstelle in axialer Richtung des Grundkörperverbunds und nach innen in diesen hinein erstreckt; der Grundkörperverbund hat eine axiale Erstreckung entlang der axialen Richtung und erstreckt sich quer zur der axialen Richtung. Die Rille reduziert die Kerbwirkung der Schnittstelle besonders gut. Die Rille kann in Blickrichtung senkrecht auf die Längsachse verrundet oder eckig ausgebildet sein.

Gemäß einer vorteilhaften Weiterbildung des Grundkörperverbunds ist die Rille verrundet ausgebildet. Indem die Rille verrundet ist, wird die Kerbwirkung der Schnittstelle noch besser reduziert. Vorzugsweise folgt die Rille in Blickrichtung senkrecht auf die Längsachse einem Verrundungskreis oder mehreren Verrundungskreisen, wobei die mehreren Verrundungskreise dann zueinander axial versetzt angeordnet sind und verschiedene Durchmesser aufweisen können.

Gemäß einer vorteilhaften Weiterbildung des Grundkörperverbunds ist der vordere Grundkörper aus einem Maraging-Stahl hergestellt. Die bezüglich des Maraging-Stahlpulvers beschriebenen Vorteile und Eigenschaften werden analog realisiert, insbesondere kann der Maraging-Stahl eine der beschriebenen Zusammensetzungen des Maraging-Stahlpulvers aufweisen.

Gemäß einer vorteilhaften Weiterbildung des Grundkörperverbunds weist der vordere Grundkörper einen zumindest abschnittsweise räumlich gekrümmten Kühlmittelkanal auf. Der zumindest abschnittsweise räumlich gekrümmte Kühlmittelkanal ist für eine besonders sanfte Kühlmittelumlenkung vorteilhaft, wobei der zumindest abschnittsweise räumlich gekrümmte Kühlmittelkanal vorzugsweise an einen vorzugsweise vorgesehenen Einspeisekanal des hinteren Grundkörper fluidkommunizierend angeschlossen sein kann und in einem Außenumfang des vorderen Grundkörpers für einen dortigen Kühlmittelaustritt mündet.

Gemäß einer vorteilhaften Weiterbildung des Grundkörperverbunds weist der vordere Grundkörper zumindest einen Plattensitz zur Montage von einem Schneidelement auf. Indem der Plattensitz vorhanden ist, kann der vordere Grundkörper mit dem Schneidelement besonders präzise bestückt sein; das Schneidelement ist vorzugsweise aus einem Hartmetall (englisch: *cemented carbide*) hergestellt, wodurch die Schneidleistung verbessert wird. Der Plattensitz kann sich bezüglich einer Längsachse des Grundkörperverbunds hauptsächlich umfänglich oder hauptsächlich radial erstrecken.

Gemäß einer vorteilhaften Weiterbildung des Grundkörperverbunds ist der vordere Grundkörper zumindest mit einem Schneidelement bestückt. Das Schneidelement kann reversibel lösbar an dem vorderen Grundkörper, zum Beispiel mittels einer Schraube oder einer Spannpratze, oder stoffschlüssig, zum Beispiel gelötet, in dem Plattensitz befestigt sein.

Gemäß einer vorteilhaften Weiterbildung des Grundkörperverbunds sind der hintere Grundkörper und der vordere Grundkörper aus verschiedenen Stahlsorten hergestellt. So kann der vordere Grundkörper aus dem Maraging-Stahl und der hintere Grundkörper aus einem davon verschiedenen Vergütungsstahl hergestellt sein, zum Beispiel aus einem Stahl umfassend 0,2 bis 0,65 Masseprozent Kohlenstoff, 0 bis 2,5 Masseprozent Silizium, 0 bis 2 Masseprozent Mangan, 0 bis 12 Masseprozent Chrom, 0 bis 5 Masseprozent Molybdän, 0 bis 3,5 Masseprozent Vanadium, 0 bis 1,5 Masseprozent Nickel, 0 bis 0,15 Masseprozent Schwefel, Rest Eisen und unvermeidbare Verunreinigungen. Vorzugsweise besteht dieser Stahl aus 0,2 bis 0,65 Masseprozent Kohlenstoff, 0,2 bis 0,65 Masseprozent Kohlenstoff, 0 bis 2,5 Masseprozent Silizium, 0 bis 2 Masseprozent Mangan, 0 bis 12 Masseprozent Chrom, 0 bis 5 Masseprozent Molybdän, 0 bis 3,5 Masseprozent Vanadium, 0 bis 1,5 Masseprozent Nickel, 0 bis 0,15 Masseprozent Schwefel, Rest Eisen und unvermeidbare Verunreinigungen. Besonders bevorzugt sind die in diesen Zusammensetzungsbereich fallenden genormten Zusammensetzungen 1.2343, 1.2311 und 1.2312 (Werkstoffnummern gemäß DIN EN 10027-2:2015-07, Juli 2015, also jeweils in Masseprozent auf die jeweils gesamte Zusammensetzung bezogen für "1.2343": 0,38 Kohlenstoff, 1,1 Silizium, 0,4 Mangan, 5 Chrom, 1,3 Molybdän, 0,4 Vanadium; für "1.2311": 0,4 Kohlenstoff, 1,5 Mangan, 1,9 Chrom, 0,2 Molybdän; für "1.2312": 0,4 Kohlenstoff, 0,4 Silizium, 1,5 Mangan, 1,9 Chrom, 0,2 Molybdän, 0,1 Schwefel) des Stahls.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1a:: eine schematische Darstellung eines Grundkörperverbunds nach einer ersten Ausführungsform;
- Fig. 1b:: eine schematische Darstellung im Bereich der Schnittstelle des Grundkörperverbunds nach der ersten Ausführungsform;
- Fig. 2:: eine schematische Darstellung im Bereich einer Schnittstelle eines Grundkörperverbunds nach einer zweiten Ausführungsform;
- Fig. 3:: eine schematische Darstellung im Bereich einer Schnittstelle eines Grundkörperverbunds nach einer zweiten Ausführungsform;
- Fig. 4:: eine schematische Darstellung im Bereich der Schnittstelle des Grundkörperverbunds nach der ersten Ausführungsform im Zustand bevor eine Rille erzeugt wurde;
- Fig. 5:: schematische Darstellung im Bereich einer Schnittstelle eines weiteren Grundkörperverbunds bevor eine Rille erzeugt wurde.

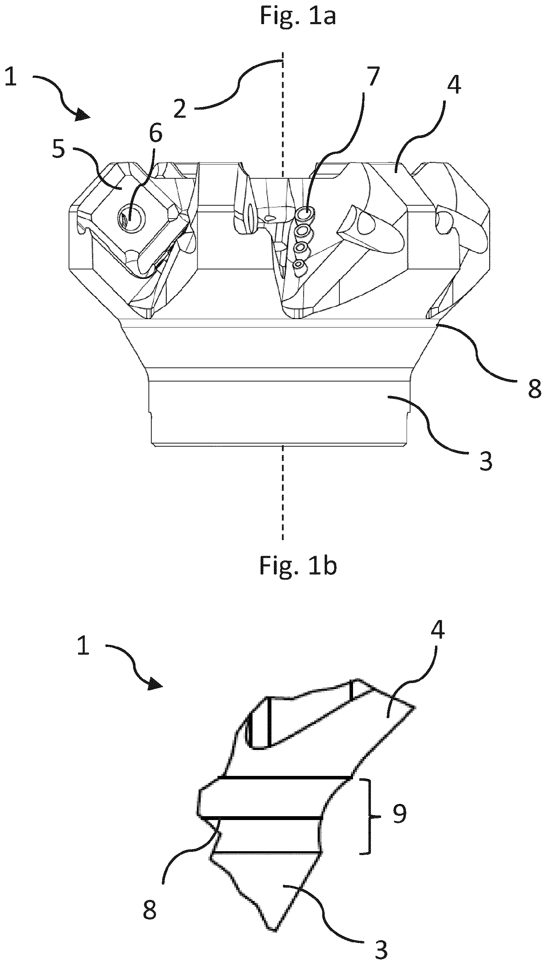

Fig. 1a zeigt einen Grundkörperverbund 1 in einer schematischen perspektiven Darstellung in Blickrichtung senkrecht auf eine Längsachse 2, entlang derer sich der Grundkörperverbund 1 axial erstreckt. Der Grundkörperverbund umfasst einen hinteren Grundkörper 3 und einen auf den hinteren Grundkörper 3 additiv aufgebauten vorderen Grundkörper 4.

Der hintere Grundkörper 3 ist konventionell aus einem vergüteten Stahl hergestellt und trägt den vorderen Grundkörper 4.

Der vordere Grundkörper 4 ist exemplarisch als Fräswerkzeugkopf (denkbar und auch möglich sind aber auch andere, insbesondere nicht rotatorisch angetriebene Werkzeugköpfe, zum Beispiel welche zum Stechen und/oder Drehen) ausgebildet und weist mehrere Plattensitze 5 zur Montage von nicht dargestellten Schneidelementen auf; die Schneidelemente lassen sich durch Schrauben reversibel lösbar in den Plattensitzen 5 befestigen, indem die Plattensitze 5 jeweils Gewindebohrungen 6 zum Einschrauben dieser Schrauben aufweisen; der zeichnerischen übersichtigkeitshalber sind in Fig. 1 nur einer der Plattensitze 5 und nur eine der Gewindebohrungen 6 mit Bezugszeichen versehen.

Der vordere Grundkörper 4 weist ferner mehrere räumlich gekrümmte Kühlmittelkanäle 7 auf, die jeweils oberhalb der Plattensitze 5 aus dem vorderen Grundkörper 4 austreten, um die Plattensitze 5 und an diese angrenzende Bereiche, auch außerhalb des vorderen Grundkörpers 4, mit Kühlmittel zu versorgen; der zeichnerischen übersichtigkeitshalber ist in Fig. 1 nur einer der Kühlmittelkanäle 7 mit einem Bezugszeichen versehen.

Der vordere Grundkörper 4 ist additiv aus einem Maraging-Stahlpulver auf dem hinteren Grundkörper 3 additiv aufgebaut, indem das Maraging-Stahlpulver einem 3D-Modell des vorderen Grundkörpers 4 folgend selektiv mittels eines Laserstrahls schichtweise unter anschließender Erstarrung aufgeschmolzen wurde, wodurch die so aufgetragene erste Schicht des Maraging-Stahlpulvers mit dem hinteren Grundkörper 3 stoffschlüssig verbunden ist. Folglich hat der Grundkörperverbund eine Schnittstelle 8, die sich exemplarisch senkrecht zur Längsachse 2 erstreckt.

Üblicherweise stellt die Schnittstelle 8 eine Schwachstelle des Grundkörperverbunds 1 dar, denn durch das selektive Laserschmelzen entsteht üblicherweise eine Einbrandzone, die sich von radial außen nach radial innen jeweils in den hinteren Grundkörper 3 und in den vorderen Grundkörper 4, ausgehend von der Schnittstelle 8, hineinerstreckt; der Einbrandzone sind also eine Dicke d, die parallel zur Längsachse 2 bemessen ist, und eine Tiefe t, die senkrecht zur Längsachse 2 ausgehend vom Außenumfang des vorderen Grundkörpers 4 und des hinteren Grundkörpers 3 bemessen ist, zuordenbar.

Fig. 1b zeigt im Detail, dass der Grundkörperverbund 1 an der Schnittstelle 8 eine bezüglich der Längsachse 2 umlaufende Rille 9 aufweist, wobei sich die Rille 9 beidseitig von der Schnittstelle 8 jeweils in den vorderen Grundkörper 4 und den hinteren Grundkörper 3 erstreckt, wodurch die Tiefe t und die Dicke d der Einbrandzone jeweils betragsmäßig auf null reduziert sind, wodurch also das zur Einbrandzone jeweils gehörende Material des vorderen Grundkörpers 4 und des hinteren Grundkörpers 3 entfernt wurde. In einer lichtmikroskopischen Aufnahme bei 50-facher Vergrößerung eines Längsschnitts des Grundkörperverbunds 1 (der Längsschnitt enthält die Längsachse 2) erscheint die Mikrostruktur, die an die Schnittstelle 8 angrenzt, aufseiten des vorderen Grundkörpers 4 zwischen seinem radial Inneren und radial Äußeren am Außenumfang der Schnittstelle 8 identisch, weil der Grundkörperverbund 1 an der Schnittstelle 8 die Rille 9 aufweist, wonach also Material von dem vorderen Grundkörper 4 angrenzend an die Schnitte 8 abgetragen wurde. Analoges gilt für die Mikrostruktur, die an die Schnittstelle 8 angrenzt, des hinteren Grundkörpers 3.

Indem der Grundkörperverbund an der Schnittstelle 8 die Rille 9 aufweist, wurde zugleich ein außenumfangsseitig ursprünglich scharfkantiger Übergang von dem hinteren Grundkörper 3 auf den vorderen Grundkörper 4 entfernt.

Wie Fig. 1b zeigt, ist die Rille 9 unter einem konstanten Radius verrundet.

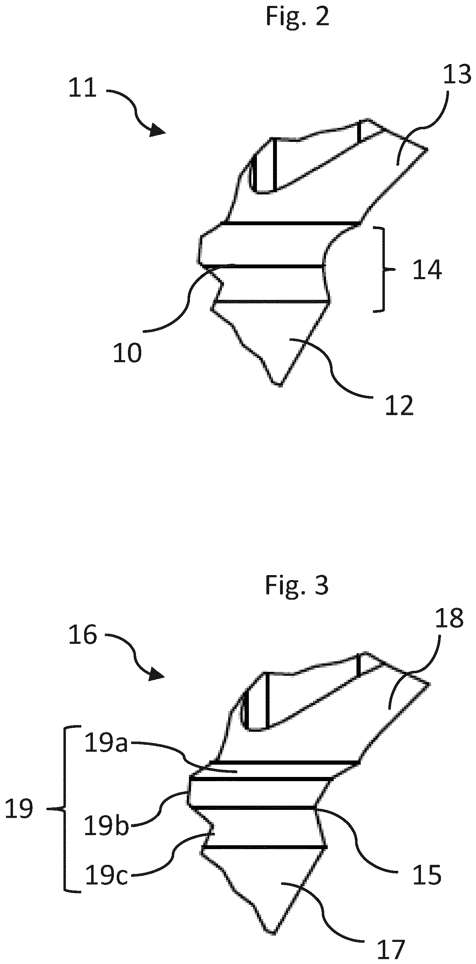

Fig. 2 zeigt analog zu Fig. 1b einen Bereich an einer Schnittstelle 10 eines Grundkörperverbunds 11. Der Grundkörperverbund 11 umfasst einen dem hinteren Grundkörper 3 analogen hinteren Grundkörper 12 und einen dem vorderen Grundkörper 4 analogen vorderen Grundkörper 13. Der vordere Grundkörper 13 ist auf dem hinteren Grundkörper 12 additiv aufgebaut, wobei der Grundkörperverbund 11 an der der Schnittstelle 8 analogen Schnittstelle 10 eine Rille 14 aufweist, die analog der Rille 9 erstreckend ausgebildet ist, aber nicht unter einem konstanten Radius verrundet ist, sondern unter einem variablen. Auch durch die Rille 14 wurde eine Einbrandzone entfernt.

Fig. 3 zeigt analog zu Fig. 2 einen Bereich an einer Schnittstelle 15 eines Grundkörperverbunds 16. Der Grundkörperverbund 16 umfasst einen dem hinteren Grundkörper 12 analogen hinteren Grundkörper 17 und einen dem vorderen Grundkörper 13 analogen vorderen Grundkörper 18. Der vordere Grundkörper 18 ist auf dem hinteren Grundkörper 17 additiv aufgebaut, wobei der Grundkörperverbund 16 an der der Schnittstelle 10 analogen Schnittstelle 15 eine Rille 19 aufweist. Der Grundkörperverbund 16 unterscheidet sich von dem Grundkörperverbund 11 nur dadurch, dass der Grundkörperverbund 16 an der Schnittstelle 15 die umlaufende Rille 19 aufweist, die nicht verrundet, sondern eckig ist, also exemplarisch drei schräg angeschliffene Fasen 19a, 19b und 19c aufweist, wobei sich die Fasen 19a und 19b im vorderen Grundkörper 18 erstrecken und sich die Fase 19c im hinteren Grundkörper 17 erstreckt. Auch durch die Rille 19 wird die bezüglich des Grundkörperverbunds 1 beschriebene Einbrandzone entfernt und die Kerbwirkung im Bereich der Schnittstelle 15 reduziert.

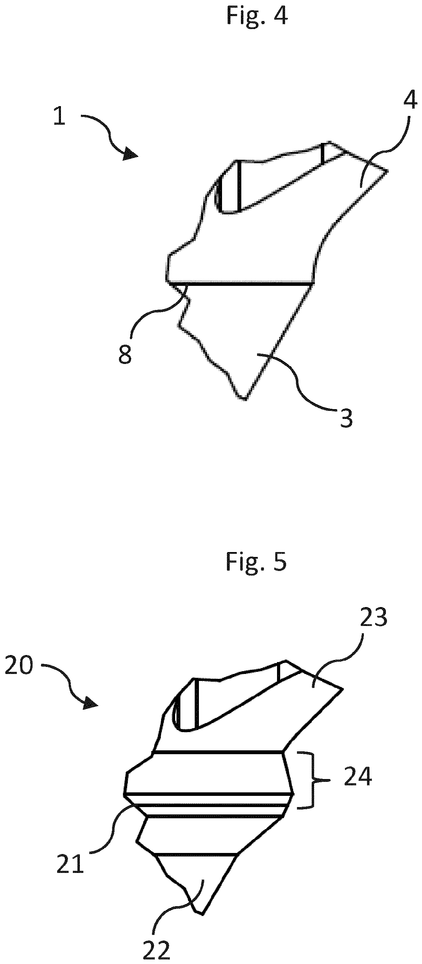

Fig. 4 zeigt, wie Fig. 1b, den Bereich der Schnittstelle 8 des Grundkörperverbunds 1, allerdings in einem Zustand bevor von dem vorderen Grundkörper 4 und dem hinteren Grundkörper 3, jeweils angrenzend an die Schnittstelle 8 Material zur Erzeugung der Rille 9 abgetragen wurde. Dementsprechend ist der Übergang von dem hinteren Grundkörper 3 zu dem vorderen Grundkörper 4 scharfkantig und mit einer Einbrandzone behaftet.

Fig. 5 zeigt analog zu Fig. 4 den Bereich einer Schnittstelle 21 eines Grundkörperverbunds 20 in einem Zustand bevor dem vorderen Grundkörper 23 und dem hinteren Grundkörper 22, jeweils angrenzend an die Schnittstelle 21 Material zur Erzeugung einer umlaufenden Rille abgetragen wurde. Der Grundkörperverbund 20 umfasst einen dem hinteren Grundkörper 3 analogen hinteren Grundkörper 22 und einen dem vorderen Grundkörper 4 analogen vorderen Grundkörper 23. Der vordere Grundkörper 23 ist auf dem hinteren Grundkörper 22 additiv aufgebaut und wurde im Unterschied zu dem vorderen Grundkörper 4 unter Ausbildung eines Auswölbungsbereichs 24 additiv aufgebaut. Durch den Auswölbungsbereich 24 wird die Einbrandzone radial weiter nach außen verlagert, so dass diese beim Materialabtragen (es wird Material von dem vorderen Grundkörper 23 und dem hinteren Grundkörper 22 beidseitig der Schnittstelle 21 abgetragen) entfernt werden kann, ohne dass dafür die Erzeugung einer Rille benötigt wird, um eine der Schnittstelle 8 im Zustand mit der Rille 9 gleiche Außenabmessung, sprich Außendurchmesser der Schnittstelle 8, zu erreichen.

Der Maraging-Stahl, aus dem die vorderen Grundkörper 4, 13, 18 und 23 hergestellt sind, wurde im additiv aufgebauten Zustand jeweils ausscheidungsgehärtet, und zwar bei einer Auslagerungstemperatur, die unterhalb der Temperatur liegt, bei der der Vergütungsstahl, aus dem die hinteren Grundkörper 3, 12, 17 und 22 hergestellt sind, angelassen wurde. Dies reduziert thermische Spannungen im Bereich der Schnittstellen 8, 10, 15 und 21.

Durch die Grundkörperverbünde 1, 11, 16 und 20 werden die folgenden Verfahrensschritte zur Herstellung dieser gezeigt: a) Bereitstellen von einem hinteren Grundkörper, beispielhaft die hinteren Grundkörper 3, 12, 17 und 22, b) additives Aufbauen von dem vorderen Grundkörper, beispielhaft die vorderen Grundkörper 4, 13, 18 und 23, auf dem hinteren Grundkörper, beispielhaft die hinteren Grundkörper 3, 12, 17 und 22.

Durch die Grundkörperverbünde 1, 11 und 16 wird ein zusätzlicher Verfahrensschritt c) offenbart, nämlich c) Abtragen von Material von dem vorderen Grundkörper 4, 13, 18 und dem hinteren Grundkörper 3, 12, 17 jeweils angrenzend an die zwischen dem vorderen Grundkörper 4, 13, 18 und dem hinteren Grundkörper 3, 12, 17 in Schritt b) gebildete Schnittstelle 8, 10, 15.

Denkbar und auch möglich ist es, dass zwischen Schritt b) und c) oder nach Schritt c) eine Ausscheidungshärtung des vorderen Grundkörpers 4, 13, 18 und 23 durchgeführt wird.

Denkbar und auch möglich ist es ferner, dass der hintere Grundkörper 3, 12, 17 und 22 während des Schritts b) aufgeheizt wird.

Die vorliegende Erfindung ist nicht auf die beschriebenen Ausführungsbeispiele beschränkt. So können auch andere Stahlsorten für die hinteren Grundkörper 3, 12 und 17 und für die vorderen Grundkörper 4, 13 und 18 verwendet werden. Auch können die vorderen Grundkörper 4, 13 und 18 durch ein vom selektiven Laserschmelzen verschiedenes additives Aufbauverfahren additiv aufgebaut werden. Auch kann der vordere Grundkörper 4, 13, 18 für eine Zerspanungsanwendung ausgebildet sein, die vom Fräsen verschieden ist.

## Patentansprüche

1. Verfahren zur Herstellung von einem Grundkörperverbund (1, 11, 16) für ein Zerspanungswerkzeug, umfassend die Verfahrensschritte: a) Bereitstellen von einem hinteren Grundkörper (3, 12, 17), b) additives Aufbauen von einem vorderen Grundkörper (4, 13, 18) auf dem hinteren Grundkörper (3, 12, 17), c) Abtragen von Material von dem vorderen Grundkörper (4, 13, 18) und dem hinteren Grundkörper (3, 12, 17) jeweils angrenzend an eine zwischen dem vorderen Grundkörper (4, 13, 18) und dem hinteren Grundkörper (3, 12, 17) in Schritt b) gebildete Schnittstelle (8, 10, 15).

2. Verfahren nach Anspruch 1, wobei in Schritt c) das Abtragen von Material mechanisch durchgeführt wird.

3. Verfahren nach einem der vorhergehenden Ansprüche, wobei in Schritt c) eine sich beidseitig von der Schnittstelle (8, 10, 15) erstreckende Rille (9, 14, 19) erzeugt wird.

4. Verfahren nach einem der vorhergehenden Ansprüche, wobei der vordere Grundkörper (4, 13, 18) in Schritt b) durch selektives Schmelzen eines Stahlpulvers additiv aufgebaut wird.

5. Verfahren nach Anspruch 4, wobei das Stahlpulver ein Maraging-Stahlpulver ist.

6. Verfahren nach einem der vorhergehenden Ansprüche, wobei der hintere Grundkörper konventionell hergestellt ist.

7. Verfahren nach einem der vorhergehenden Ansprüche, wobei in Schritt b) der vordere Grundkörper (4, 13, 18) unter Ausbildung von einem zumindest abschnittsweise räumlich gekrümmten Kühlmittelkanal (7) additiv aufgebaut wird.

8. Verfahren nach einem der vorhergehenden Ansprüche, wobei in Schritt b) der vordere Grundkörper (4, 13, 18) unter Ausbildung von zumindest einem Plattensitz (6) zur Montage von einem Schneidelement additiv aufgebaut wird.

9. Grundkörperverbund (1, 11, 16) für ein Zerspanungswerkzeug, umfassend einen hinteren Grundkörper (3, 12, 17) und einen additiv auf den hinteren Grundkörper aufgebauten vorderen Grundkörper (4, 13, 18), wobei der Grundkörperverbund (1, 11, 16) an einer Schnittstelle (8, 10, 15) zwischen dem hinteren Grundkörper (3, 12, 17) und dem vorderen Grundkörper (4, 13, 18) eine umlaufende Rille (9, 14, 19) aufweist, wobei die Rille (9, 14, 19) beidseitig von der Schnittstelle (8, 10, 15) erstreckend ausgebildet ist.

10. Grundkörperverbund (1, 11, 16) nach Anspruch 9, wobei die Rille (9, 14, 19) verrundet ausgebildet ist.

11. Grundkörperverbund (1, 11, 16) nach einem der Ansprüche 9 oder 10, wobei der vordere Grundkörper (4, 13, 18) aus einem Maraging-Stahl hergestellt ist.

12. Grundkörperverbund (1, 11, 16) nach einem der Ansprüche 9 bis 11, wobei der vordere Grundkörper (4, 13, 18) einen zumindest abschnittsweise räumlich gekrümmten Kühlmittelkanal (7) aufweist.

13. Grundkörperverbund (1, 11, 16) nach einem der Ansprüche 9 bis 12, wobei der vordere Grundkörper (4, 13, 18) zumindest einen Plattensitz (5) zur Montage von einem Schneidelement aufweist.

14. Grundkörperverbund (1, 11, 16) nach einem der Ansprüche 9 bis 13, wobei der hintere Grundkörper (3, 12, 17) und der vordere Grundkörper (4, 13, 18) aus verschiedenen Stahlsorten hergestellt sind.
